# EUROPÄISCHE PATENTSCHRIFT

(11) **EP 3 739 660 B1**
(45) Veröffentlichungstag und Bekanntmachung des Hinweises auf die Patenterteilung: **12.07.2023**
(21) Anmeldenummer: 20174185.7
(22) Anmeldetag: 12.05.2020
(51) Int. Cl.: H01M 10/04, H01M 10/613, H01M 50/107, H01M 10/625, H01M 10/643, H01M 50/213, H01M 10/655, H01M 10/6557, H01M 50/24, H01M 50/50, H01M 50/249, B60K 1/04, B60L 50/64

(54) **BATTERIEMODUL FÜR EIN KRAFTFAHRZEUG**
BATTERY MODULE FOR A MOTOR VEHICLE
MODULE DE BATTERIE POUR UN VÉHICULE AUTOMOBILE

(30) Priorität: 17.05.2019 DE 102019207207
(43) Veröffentlichungstag der Anmeldung: 18.11.2020
(73) Patentinhaber: VOLKSWAGEN AG, 38440 Wolfsburg (DE)
(72) Erfinder: SCHAAR, Dr. Bastian, 38116 Braunschweig (DE); WOLFF, Nicolas, 38102 Braunschweig (DE)
(74) Vertreter: FDST Patentanwälte

(56) Entgegenhaltungen:
- DE-A1- 10 122 682
- US-A1- 2009 004 556
- US-A1- 2011 135 975

## Beschreibung

Die Erfindung betrifft ein Batteriemodul beispielsweise für ein Kraftfahrzeug, insbesondere für ein elektrisch angetriebenes oder antreibbares Kraftfahrzeug, wie beispielsweise ein Elektro- oder Hybridfahrzeug. Die Erfindung betrifft weiterhin eine Batteriezelle für ein solches Batteriemodul sowie ein elektrisch angetriebenes oder antreibbares Kraftfahrzeug mit einem derartigen Batteriemodul.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriemodul (Batteriezellmodul) auf, bei welchem mehrere einzelne Batteriezellen modular verschaltet sind.

Die Batteriezellen können beispielsweise als sogenannte Rundzellen oder zylindrische Zellen ausgeführt sein. Derartige Rundzellen weisen in der Regel eine zylindrische oder runde Bauform mit einem (kreis-)zylindrischen Zellgehäuse auf.

Beim Aufbau einer Fahrzeugbatterie aus Rundzellen ist es hierbei häufig notwendig, dass mehr als tausend einzelne Batteriezellen zu einem Batteriemodul gekoppelt werden müssen. Aufgrund der hohen Anzahl von Batteriezellen ist deren Handhabung im Zuge der Montage und deren Halterung im Modulverbund sowie die automotiv-taugliche Anbindung im Batteriemodul und die abschließende elektrische Kontaktierung mit einem großen Fertigungsaufwand verbunden. Dadurch werden sowohl die Fertigungsdauer als auch die Fertigungskosten derartiger Batteriemodule nachteilig erhöht.

Die Halterung oder Befestigung der Batterie- oder Rundzellen im Batteriemodul erfolgt typischerweise dadurch, dass eine vormontierte Zellanordnung der Batteriezellen durch eine Vergussmasse (beispielsweise Gießharz) stoffschlüssig gefügt oder geklebt wird. Anschließend werden die einzelnen Batteriezellen mittels eines Drahtbondens miteinander elektrisch leitend kontaktiert.

Bei einem solchen Batteriemodul mit vergossenen oder stoffschlüssig gefügten Batteriezellen wird eine spätere Demontage zu Wartungs-, Reparatur- oder Recyclingfall nachteilig erschwert oder sogar unmöglich.

Des Weiteren ist es häufig notwendig, dass die Vergussmasse bei der Fertigung des Batteriemoduls mit einer hohen Temperatur auf die Batteriezellen aufgebracht wird. Hierbei tritt das Problem auf, dass die Batteriezellen bei einer hohen Batteriezelltemperatur, beispielsweise höher als 45 °C, beginnen zu degenerieren. Dies bedeutet, dass bei derartig erhöhten Temperaturen elektrochemische Reaktionen innerhalb der Batteriezellen auftreten, welche die Batteriezellen beschädigen oder vollständig zerstören. Daher ist es notwendig, dass das Vergießen unter kontrollierten Bedingungen erfolgt, da einerseits die Temperatur der Vergussmasse einerseits hinreichend hoch sein muss, um ein gutes Fließ- und Benetzungsverhalten zu gewährleisten, aber andererseits eine Degeneration der Batteriezellen vermieden werden soll. Dadurch wird der Fertigungsaufwand des Batteriemoduls nachteilig weiter erhöht.

Die Batteriezellen weisen jeweils zwei Zellpole, einen Minuspol und einen Pluspol, als elektrische Kontakt- oder Anbindungsstellen auf, so dass im Zuge der elektrischen Kontaktierung der Batteriezellen jeweils zwei Drahtbond-Schritte je Batteriezelle notwendig sind. Dadurch ist ein hoher Verschaltungsaufwand der Batteriezellen des Batteriemoduls realisiert, wodurch die Fertigungsdauer nachteilig erhöht wird.

Aus der DE 101 22 682 A1 ist eine Zellenmodulstruktur für ein Batteriemodul mit mehreren als Rundzellen ausgeführten Batteriezellen bekannt. Die Zellenmodulstruktur weist eine Trägerplatte mit einer Anzahl von Verbindungsanschlüssen zur Kontaktierung mit den Batteriezellen auf. Die Verbindungsanschlüsse sind als emporstehende Gewindeteile mit einem Außengewinde ausgeführt. Die Batteriezellen sind stirnseitig mit einem Zellenanschluss ausgeführt, in welchen ein Innengewinde eingebracht ist. Zur Montage des Batteriemoduls werden die Batteriezellen auf die Verbindungsanschlüsse aufgesetzt und die Gewinde ineinander gedreht.

In der DE 10 2015 210 671 A1 ist ein Batteriemodul mit einer Anzahl von als Rundzellen ausgebildeten Batteriezellen beschrieben. Die Zellpole der Batteriezellen sind hierbei koaxial zueinander an einer gemeinsamen Stirnseite des Zellgehäuses angeordnet. Die Zellpole weisen hierbei jeweils ein Gewinde auf, welche in korrespondierende Gewinde eines Batteriemoduldeckels eindrehbar sind.

Die US 2011/135975 A1 offenbart ein Batteriemodul mit einer Struktur, die eine Kammer definiert und eine Vielzahl von Sockeln umfasst, wobei jeder Sockel so konfiguriert ist, dass er eine elektrochemische Zelle aufnimmt.

Der Erfindung liegt die Aufgabe zugrunde, ein besonders geeignetes Batteriemodul anzugeben. Insbesondere soll ein Batteriemodul angegeben werden, welches einen besonders niedrigen Montage- und Verschaltungsaufwand aufweist. Der Erfindung liegt weiterhin die Aufgabe zugrunde, eine Batteriezelle für ein solches Batteriemodul sowie ein elektrisch angetriebenes oder antreibbares Kraftfahrzeug mit einem derartigen Batteriemodul anzugeben.

Hinsichtlich des Batteriemoduls wird die Aufgabe mit den Merkmalen des Anspruchs 1 und hinsichtlich der Batteriezelle mit den Merkmalen des Anspruchs 9 sowie hinsichtlich des Kraftfahrzeugs mit den Merkmalen des Anspruchs 10 erfindungsgemäß gelöst. Vorteilhafte Ausgestaltungen und Weiterbildungen sind Gegenstand der Unteransprüche. Die im Hinblick auf das Batteriemodul angeführten Vorteile und Ausgestaltungen sind sinngemäß auch auf die Batteriezelle und/oder das Kraftfahrzeug übertragbar und umgekehrt.

Das erfindungsgemäße Batteriemodul ist beispielsweise für einen stationären Energiespeicher geeignet und eingerichtet. Vorzugsweise ist das Batteriemodul für einen fahrzeuginternen Energiespeicher, also für eine Fahrzeugbatterie eines elektrisch angetriebenen oder antreibbaren Kraftfahrzeugs, geeignet und eingerichtet. Das Batteriemodul weist mindestens eine Batteriezelle und einen Zellenträger (Modulträger, Trägerblock) als Zellverbinder auf.

Die Batteriezelle weist ein zylindrisches Zellgehäuse mit einer außenseitigen Mantelfläche auf. Mit anderen Worten ist die Batteriezelle als eine Rundzelle oder zylindrische Zelle ausgeführt. In die Mantelfläche des Zellgehäuses ist zumindest abschnittsweise ein Außengewinde oder Schraubengewinde, also eine profilierte Einkerbung, welche fortlaufend wendelartig, also als Schraubenlinie verläuft, eingebracht.

Der Zellenträger weist hierbei mindestens eine Gewindebohrung mit einem Innengewinde auf, in welche die mindestens eine Batteriezelle eingedreht (eingeschraubt, eingesetzt) oder eindrehbar (einschraubbar, einsetzbar) ist. Dies bedeutet, dass das Innengewinde der Gewindebohrung komplementär oder kämmend zum Außengewinde des Zellgehäuses ausgeführt ist, also dass die Gewindebohrung und die Batteriezelle ein zusammenpassendes Paar sind. Dadurch ist ein besonders geeignetes Batteriemodul gebildet.

Das Außengewinde der Batteriezelle wird somit zur Montage des Batteriemoduls in die Gewindebohrung des Zellenträgers eingedreht. Dadurch ist eine besonders einfache und aufwandreduzierte Montage des Batteriemoduls realisiert. Insbesondere ist somit auch eine vereinfachte Demontage einzelner Batteriezellen im Zuge einer Wartung, einer Reparatur, oder eines Recyclings ermöglicht.

Durch das Außengewinde der Batteriezelle einerseits und das Innengewinde der Gewindebohrung des Zellenträgers andererseits ist eine kraftschlüssige Halterung oder Befestigung der Batteriezelle am Zellenträger realisiert. Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

Die Außen- und Innengewinde des Zellgehäuses beziehungsweise des Zellenträgers sind hierbei beispielsweise spanend über mechanische (Nach-)Bearbeitung, oder spanlos (umformend) mittels Gießen oder additiven Fertigungsverfahren hergestellt.

Im Gegensatz zum Stand der Technik erfolgt die kraftschlüssige Gewinde- oder Schraubverbindung nicht lediglich im Bereich einer Stirnseite des Zellgehäuses, sondern entlang dessen Mantelfläche. Dadurch ist im Vergleich zum Stand der Technik ein Wesentlich größerer Eingriff der Gewinde, also ein verlängerter Verbindungs- oder Fügebereich, zwischen der Batteriezelle und dem Zellenträger ermöglicht. Somit ist eine betriebssichere, vibrations- und schockbeständige Verbindung zwischen der mindestens einen Batteriezelle und dem Zellenträger realisiert.

Erfindungsgemäß erstreckt sich das Außengewinde im Wesentlichen über die komplette axiale Zellhöhe des Zellgehäuses. Mit anderen Worten ist das Zellgehäuse nach Art eines Gewindebolzens ausgeführt. Dadurch ist ein besonders langer und großflächiger Verbindungs- oder Fügebereich realisiert, wodurch eine besonders betriebssichere, vibrations- und schockbeständige Verbindung zwischen der mindestens einen Batteriezelle und dem Zellenträger gewährleistet ist.

Erfindungsgemäß weist die Gewindebohrung eine hinreichende axiale Tiefe auf, so dass die Batteriezelle möglichst vollständig in die Gewindebohrung eingedreht oder eindrehbar ist.

In einer geeigneten Weiterbildung ist ein Zellpol, also der Pluspol oder der Minuspol der Batteriezelle auf das Zellgehäuse geschaltet. Dies bedeutet, dass das Zellgehäuse, insbesondere das Außengewinde, effektiv einen der Zellpole der Batteriezelle bildet. Dadurch ist eine besonders einfache Kontaktierung der Batteriezelle ermöglicht.

Der jeweils andere Zellpol wird beispielsweise mittels Drahtbonden oder mittels (Laser-)Schweißens kontaktiert. Ebenso denkbar ist beispielsweise eine bodenseitige Kontaktstelle der Gewindebohrung, beispielsweise nach Art eines Federkontaktes, wodurch eine weitere Vereinfachung der Montage des Batteriemoduls bewirkt wird.

In einer möglichen Ausgestaltung ist der Zellenträger zumindest teilweise aus einem elektrisch leitfähigen Material gefertigt. Das elektrisch leitfähige Material ist beispielsweise ein Metall, insbesondere ein Kupfer- oder Aluminiummaterial. Hierbei ist es beispielsweise möglich, dass der Zellenträger ein Stanzgitter oder eine Stromschiene aus dem elektrisch leitfähigen Material aufweist, welche(s) in ein elektrisch nicht leitfähiges Trägermaterial, beispielsweise als Einlegeteil, integriert ist. Dadurch ist eine besonders einfache und aufwandsreduzierte Kontaktierung und/oder Verschaltung der Batteriezellen möglich. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Alternativ ist es beispielsweise denkbar, dass der Zellenträger aus einem elektrisch nicht leitfähigen Material, beispielsweise aus einem Kunststoffmaterial, gefertigt ist. Der Zellenträger ist hierbei beispielsweise aus einem ABS- (AcrylnitrilButadien-Styrol-Copolymere) oder einem PP-Kunststoffmaterial (Polypropylen), bedarfsweise auch mit Glasfaserverstärkung (z.B. PP GF 30), hergestellt. Dadurch ist ein besonders baugewichts- und kostenreduziertes Batteriemodul realisiert.

In einer besonders zweckmäßigen Ausbildung ist die Batteriezelle im eingedrehten Zustand elektrisch leitend kontaktiert. Dies bedeutet, dass durch das Einschrauben oder Eindrehen der Batteriezellen in die Gewindebohrungen des Zellenträgers die elektrische Kontaktierung zumindest eines Zellpols der Batteriezellen erfolgt. Bei einer Anzahl von in den Zellenträger eingedrehten Batteriezellen erfolgt hierbei vorzugsweise elektrischen Parallelschaltung der kontaktierten Zellpole. Dadurch entfallen im Vergleich zum Stand der Technik beispielsweise die Hälfte der zur Kontaktierung und/oder Verschaltung notwendigen Drahtbond-Schritte, da ein Zellpol der Batteriezelle bereits durch das Eindrehen in die Gewindebohrung kontaktiert wird.

Die insbesondere elektrochemischen Batteriezellen sind beispielsweise als Lithium-lonen-Batteriezellen ausgeführt. Derartige Batteriezellen weisen in der Regel einen Wirkungsgrad von etwa 95% auf, wobei die auftretenden Verluste in Wärmeenergie gewandelt werden. Für einen effizienten und zuverlässigen Einsatz des Batteriemoduls in einem Kraftfahrzeug ist es daher notwendig, dass die Batteriezellen im Betrieb auf eine Betriebstemperatur, beispielsweise 25 °C, temperiert werden, da einerseits Degenerationen bei Batterietemperaturen höher als 45 °C beginnen, und andererseits die Leistung der Lithium-Ionen-Batteriezellen unterhalb von -5 °C abnimmt.

Zum Zwecke einer Temperierung oder eines Temperaturmanagements, und somit zum Zwecke eines möglichst leistungsoptimierten Betriebs des Batteriemoduls, ist in einer geeigneten Ausführung mindestens ein Kühlmittelkanal, also eine zur Führung von Kühl- oder Wärmefluiden vorgesehene Kanalstruktur, in den Zellenträger integriert, welcher um die mindestens eine Gewindebohrung geführt ist. Somit ist eine performante oder leistungsfähige, zellnahe Temperierung der Batteriezellen ermöglicht.

Im Montage- oder Einbauzustand ist der mindestens eine Kühlmittelkanal geeigneterweise an einen entsprechenden (externen) Kühlmittelkreislauf angeschlossen, und von einem Kühl- oder Wärmemittel durchströmt. Dadurch werden eine effektive und betriebssichere Kühlung und/oder eine Wärmespeicherung für die Batteriezellen des Batteriemoduls realisiert, wodurch die Lebensdauer der Batteriezellen und somit des Batteriemoduls erhöht werden.

In einer zusätzlichen oder alternativen Ausgestaltung ist es für eine Temperierung oder ein Temperaturmanagement der Batteriezellen vorgesehen, dass im Bereich der oder jeder Gewindebohrung ein Phasenwechselmaterial (engl. phase change material, PCM) als Latentwärmespeicher (engl. latent heat system, LHS) in den Zellenträger eingebracht ist, welches bei einem Phasenübergang eine feste Struktur beibehält. Dies bedeutet, dass das Phasenwechselmaterial sowohl vor als auch nach dem Phasenübergang ein Festkörpermaterial ist, sich also beispielsweise im Zuge des Phasenübergangs nicht verflüssigt.

Der Zellenträger ist hierbei insbesondere aus einem PCM-Matrix-Material gefertigt. Dadurch wird die Wärmekapazität des Zellenträgers erhöht. Somit ist es beispielsweise möglich, dem umgebenden Zellenträgermaterial und/oder den Batteriezellen sowohl Wärme als auch Kälte zu entziehen und entsprechend einzuspeichern. Durch das eingesetzte oder eingebrachte PCM ist es beispielsweise möglich, Temperaturschwankungen der Batterietemperatur auszugleichen und/oder die Batterietemperatur zu stabilisieren. Dadurch werden Wärmespitzen der Batterietemperatur im Wesentlichen passiv verhindert, ohne dass die Batteriezelle oder der Zellenträger aktiv gekühlt werden muss.

In einer denkbaren Weiterbildung ist eine Anzahl von Gewindebohrungen in einem zentriert-rechteckigen oder hexagonalen Rastermaß im Zellenträger angeordnet. Mit anderen Worten sind benachbarte Reihen von Gewindebohrungen gegeneinander versetzt angeordnet, so dass eine besonders bauraumkompakte Anordnung der Batteriezellen realisiert ist. Dadurch wird der Bauraumbedarf des Batteriemoduls vorteilhaft reduziert, was insbesondere hinsichtlich Einbau- oder Anwendungssituationen in einem Kraftfahrzeug vorteilhaft ist.

Die erfindungsgemäße Batteriezelle ist für ein vorstehend beschriebenes Batteriemodul geeignet und eingerichtet. Die Batteriezelle ist als eine Rundzelle oder zylindrische Zelle mit einem zylindrischen Zellgehäuse ausgeführt, wobei in eine außenseitige Mantelfläche des Zellgehäuses ein Außen- oder Schraubengewinde eingebracht ist.

Die Batteriezelle ist mittels des Außengewindes in eine Gewindebohrung eines Zellenträgers des Batteriemoduls eindrehbar, wobei die Batteriezelle hierbei kraftschlüssig am Zellenträger befestigt, und vorzugsweise elektrisch leitfähig kontaktiert oder verschaltet wird. Dadurch ist eine besonders einfache und aufwandreduzierte Montage und Verschaltung des Batteriemoduls realisierbar. Insbesondere ist auch eine vereinfachte Demontage einzelner Batteriezellen aus dem Batteriemodul im Zuge einer Wartung, einer Reparatur, oder eines Recyclings ermöglicht.

In einer bevorzugten Anwendung ist das vorstehend beschriebene Batteriemodul ein Teil einer Fahrzeugbatterie eines elektrisch angetriebenen oder antreibbaren Kraftfahrzeugs, insbesondere eines Hybrid- oder Elektrofahrzeugs. Durch das erfindungsgemäße Batteriemodul wird der Fertigungsaufwand, und somit die Fertigungskosten des Kraftfahrzeugs vorteilhaft reduziert.

Nachfolgend ist ein Ausführungsbeispiel der Erfindung anhand einer Zeichnung näher erläutert. Darin zeigen in schematischen und vereinfachten Darstellungen:
- Fig. 1: ausschnittsweise eine Fahrzeugbatterie eines Kraftfahrzeugs, mit einer Anzahl von Batteriemodulen mit jeweils einer Anzahl von Batteriezellen,
- Fig. 2: in Schnittansicht eine Batteriezelle, und
- Fig. 3: in Draufsicht einen Zellenträger des Batteriemoduls mit Gewindebohrungen und integrierten Kühlmittelkanälen.

Einander entsprechende Teile und Größen sind in allen Figuren stets mit den gleichen Bezugszeichen versehen.

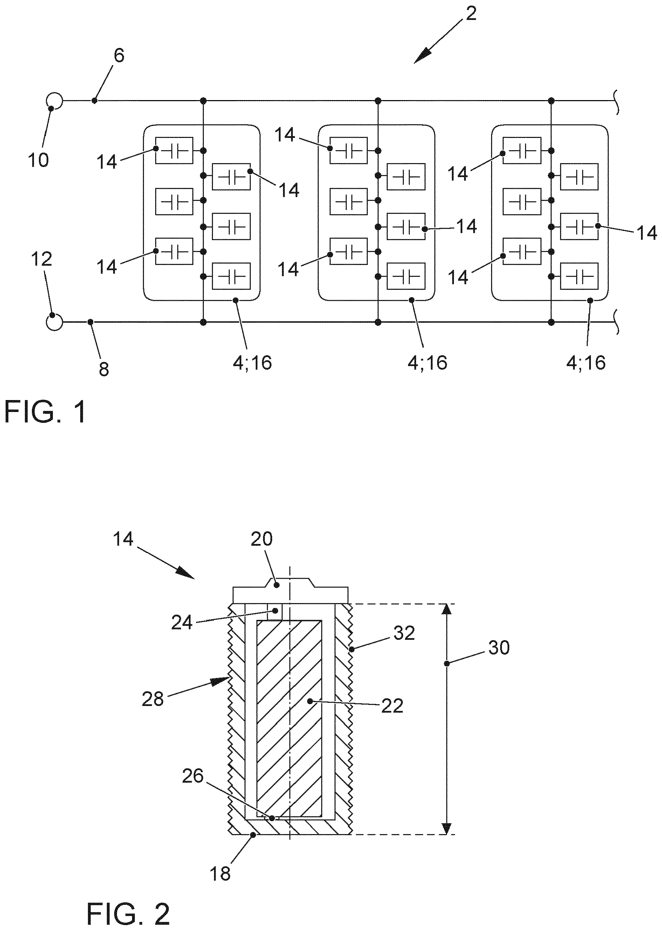

Die Fig. 1 zeigt in einer vereinfachten und schematischen Darstellung ausschnittsweise eine Fahrzeugbatterie 2 eines nicht näher dargestellten Kraftfahrzeugs. Die (Fahrzeug-)Batterie 2 ist insbesondere als eine elektrochemische Sekundärbatterie ausgeführt, wobei das Kraftfahrzeug insbesondere ein elektrisch angetriebenes oder antreibbares Kraftfahrzeug, beispielsweise ein Elektro- oder Hybridfahrzeug, ist.

Die Batterie 2 weist eine Anzahl von Batteriemodulen 4 auf, welche beispielsweise als Lithium-Ionen-Akkumulatoren ausgeführt sind. Beispielhaft sind in der Fig. 1 lediglich drei parallel geschaltete Batteriemodule 4 gezeigt, welche jeweils an einen Pluspfad 6 einerseits und an einen Minuspfad 8 andererseits angeschlossen sind. Die Pfade 6, 8 sind jeweils an einen korrespondierenden Anschluss 10, 12 der Batterie 2 geführt.

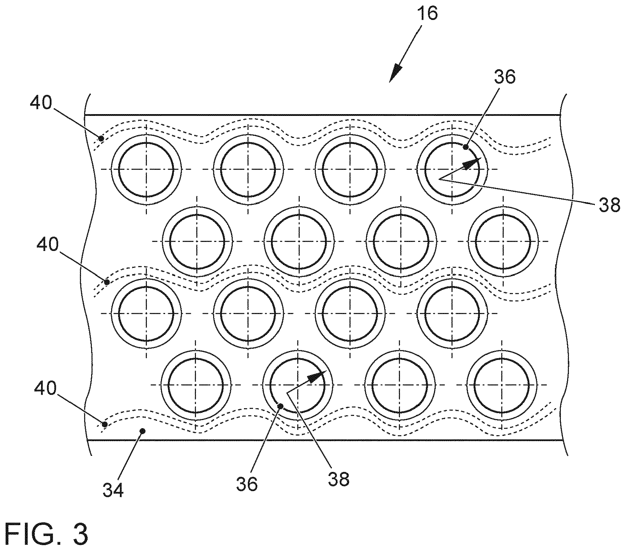

In der Fig. 1 sind die Batteriemodule 4 lediglich beispielhaft mit jeweils sechs einzelnen Batteriezellen 14 (Fig. 2) gezeigt. Die Batteriezellen 14 sind benachbart zueinander in dem Batteriemodul 4 angeordnet, und gemeinsam zu dem Batteriemodul 4 verschaltet. Die Batteriezellen 14 sind in der Fig. 1 lediglich beispielhaft mit Bezugszeichen versehen. Zur Halterung und Kontaktierung der Batteriezellen 14 weisen die Batteriemodule 4 jeweils einen Zellenträger (Modul-Trägerblock) 16 als Zellenverbinder auf (Fig. 3).

Die in Fig. 2 einzeln dargestellten Batteriezellen 14 sind als Rundzellen oder zylindrische Zellen ausgeführt. Die oder jede Batteriezelle 14 weist hierbei ein zylindrisches Zellgehäuse 18 auf, welches mittels eines stirnseitigen Zelldeckels 20 verschlossen ist. Innerhalb des Zellgehäuses 18 ist ein Elektrodenwickel 22 angeordnet. Der Elektrodenwickel 22 weist zwei Zellpole 24, 26, also einen Pluspol 24 und einen Minuspol 26 auf. Der Pluspol 24 ist an den Zelldeckel 20 kontaktiert. Der Minuspol 26 ist hierbei an der gegenüberliegenden Stirnseite des Zellgehäuses 18 an einen Gehäuseboden kontaktiert. Mit anderen Worten ist der Minuspol 26 auf das Zellgehäuse 18 geschaltet. Dies bedeutet, dass der Pluspol der Batteriezelle 14 im Wesentlichen durch den Zelldeckel 20, und der Minuspol der Batteriezelle 14 im Wesentlichen durch das Zellgehäuse 18 gebildet ist. Der Zelldeckel 20 und das Zellgehäuse 18 sind hierbei zweckmäßigerweise elektrisch voneinander isoliert. Alternativ ist es beispielsweise denkbar ist, dass der Pluspol 24 an das Zellgehäuse 18, und der Minuspol 26 an den Zelldeckel 20 geschaltet ist.

Das Zellgehäuse 18 weist eine außenseitige Mantelfläche 28 mit einer axialen Zellhöhe 30 auf. In die Mantelfläche 28 ist ein Außengewinde 32 eingebracht, welches sich im Wesentlichen über die komplette axiale Zellhöhe 30 des Zellgehäuses 18 erstreckt.

Der in Fig. 3 lediglich ausschnittsweise dargestellte Zellenträger 16 weist einen Trägerkörper 34 auf, in welchen eine Anzahl von Gewindebohrungen 36 eingebracht sind. Die Gewindebohrungen 36 weisen hierbei jeweils ein Innengewinde 38 auf, welches komplementär zu dem Außengewinde 32 ausgebildet ist. Die Gewindebohrungen sind in der Fig. 3 lediglich beispielhaft mit Bezugszeichen versehen.

Der Trägerkörper 34 ist beispielsweise aus einem Phasenwechsel-Matrix-Material hergestellt, wobei das Phasenwechsel-Matrix-Material bei einem Phasenübergang eine feste Struktur behält. Der Trägerkörper 34 ist hierbei zumindest teilweise aus einem elektrisch leitenden Material hergestellt. In den Trägerkörper 34 ist hierbei beispielsweise ein Stanzgitter integriert, welches an die Gewindebohrungen 36 beziehungsweise an deren Innengewinde 38 geführt ist.

Zur Montage des Batteriemoduls 4 werden die Batteriezellen 14 mittels ihres Außengewindes 32 in die Innengewinde 38 der Gewindebohrungen 36 des Zellenträgers 16 eingedreht oder eingeschraubt. Aufgrund der Kontaktierung des Zellpols 26 mit dem Zellgehäuse 18 sowie aufgrund des elektrisch leitenden Materials des Trägerkörpers 34 werden die Batteriezellen 14 durch das Eindrehen einerseits kraftschlüssig am Zellenträger 16 befestigt und andererseits elektrisch miteinander verschaltet. Insbesondere werden die Batteriezellen 14 hierbei in einer elektrischen Parallelschaltung miteinander elektrisch leitfähig gekoppelt.

In dem Ausschnitt der Fig. 3 sind vier Reihen von Gewindebohrungen 36 gezeigt, die Reihen sind hierbei jeweils gegeneinander versetzt angeordnet, so dass die Gewindebohrungen 36 ein etwa zentriert-rechteckiges oder hexagonales Rastermaß im Trägerkörper 34 aufweisen.

Um die Gewindebohrungen 36 sind Kühlmittelkanäle 40 geführt, welche in den Trägerkörper 34 integriert sind. Die Kühlmittelkanäle 40 sind in der Fig. 3 strichpunktiert dargestellt. Die Kühlmittelkanäle 40 sind hierbei wellenartig oder mäanderartig um die Gewindebohrungen 36 geführt, so dass jede Gewindebohrung 36 zumindest abschnittsweise von einem Kühlmittelkanal 40 umgeben oder eingefasst ist. Die Kühlmittelkanäle 40 können hierbei beispielsweise als ein durchgängiger, also einteiliger Kühlmittelkanal, oder als separate, parallele Kühlmittelkanäle ausgeführt sein.

Im Montage- oder Einbauzustand sind die Kühlmittelkanäle 40 an einen Kühlmittelkreislauf der Batterie 2 und/oder des Kraftfahrzeugs angeschlossen, und von einem Kühl- oder Wärmemittel durchströmt. Durch das bauraumkompakte Rastermaß der Gewindebohrungen 36 und durch das Phasenwechsel-Matrix-Material des Trägerkörpers 34 sowie durch die Kühlmittelkanäle 40 ist ein besonders effektives, zuverlässiges und betriebssicheres Temperaturmanagement der Batteriezellen 14 realisiert, welches eine performante, zellnahe Temperierung der Batteriezellen 14 im Betrieb des Batteriemoduls 4 gewährleistet.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit dem Ausführungsbeispiel beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Fahrzeugbatterie
- 4: Batteriemodul
- 6: Pluspfad
- 8: Minuspfad
- 10: Anschluss
- 12: Anschluss
- 14: Batteriezelle
- 16: Zellenträger
- 18: Zellgehäuse
- 20: Zelldeckel
- 22: Elektrodenwickel
- 24: Zellpol/Pluspol
- 26: Zellpol/Minuspol
- 28: Mantelfläche
- 30: Zellhöhe
- 32: Außengewinde
- 34: Trägerkörper
- 36: Gewindebohrung
- 38: Innengewinde
- 40: Kühlmittelkanal

## Patentansprüche

1. Batteriemodul (4), aufweisend mindestens eine Batteriezelle (14) und einen Zellenträger (16),
- wobei die Batteriezelle (14) ein zylindrisches Zellgehäuse (18) mit einer außenseitigen Mantelfläche (28) aufweist,
- wobei in die Mantelfläche (28) ein Außengewinde (32) eingebracht ist,
- wobei sich das Außengewinde (32) im Wesentlichen über die komplette axiale Zellhöhe (30) des Zellgehäuses (18) erstreckt,
- wobei der Zellenträger (16) mindestens eine Gewindebohrung (36) mit einem Innengewinde (38) aufweist, und
- wobei die Gewindebohrung (36) eine hinreichende axiale Tiefe aufweist, so dass die mindestens eine Batteriezelle (14) vollständig eingedreht oder eindrehbar ist.

2. Batteriemodul (4) nach Anspruch 1,
**dadurch gekennzeichnet,**
**dass** ein Zellpol (26) der Batteriezelle (14) auf das Zellgehäuse (18) geschaltet ist.

3. Batteriemodul (4) nach Anspruch 1 oder 2,
**dadurch gekennzeichnet,**
**dass** der Zellenträger (16) zumindest teilweise aus einem elektrisch leitfähigen Material gefertigt ist.

4. Batteriemodul (4) nach einem der Ansprüche 1 bis 3,
**dadurch gekennzeichnet,**
**dass** die Batteriezelle (14) in eingedrehten Zustand elektrisch leitend kontaktiert ist.

5. Batteriemodul (4) nach einem der Ansprüche 1 bis 4,
**dadurch gekennzeichnet,**
**dass** ein Kühlmittelkanal (40) in den Zellenträger (16) integriert ist, welcher um die mindestens eine Gewindebohrung (36) geführt ist.

6. Batteriemodul (4) nach einem der Ansprüche 1 bis 5,
**dadurch gekennzeichnet,**
**dass** im Bereich der Gewindebohrung (36) ein Phasenwechselmaterial in den Zellenträger (16) eingebracht ist, welches bei einem Phasenübergang eine feste Struktur behält.

7. Batteriemodul (4) nach einem der Ansprüche 1 bis 6,
**dadurch gekennzeichnet,**
**dass** eine Anzahl von Gewindebohrungen (36) in einem zentriert-rechteckigen oder hexagonalen Rastermaß im Zellenträger (16) angeordnet ist.

8. Batteriezelle (14) für ein Batteriemodul (4) nach einem der Ansprüche 1 bis 7, aufweisend ein zylindrisches Zellgehäuse (18), welches eine außenseitige Mantelfläche (28) aufweist, in welche ein Außengewinde (32) eingebracht ist, wobei sich das Außengewinde (32) im Wesentlichen über die komplette axiale Zellhöhe (30) des Zellgehäuses (18) erstreckt.

9. Elektrisch angetriebenes oder antreibbares Kraftfahrzeug, aufweisend eine Fahrzeugbatterie (2) mit einem Batteriemodul (4) nach einem der Ansprüche 1 bis 7.

## Claims

1. Battery module (4), comprising at least one battery cell (14) and a cell carrier (16),
- wherein the battery cell (14) has a cylindrical cell housing (18) with an external lateral surface (28),
- wherein an external thread (32) is introduced into the lateral surface (28),
- wherein the external thread (32) extends substantially the full axial cell height (30) of the cell housing (18),
- wherein the cell carrier (16) has at least one threaded hole (36) with an internal thread (38), and
- wherein the threaded hole (36) has sufficient axial depth such that the at least one battery cell (14) is fully screwed in or can be fully screwed in.

2. Battery module (4) according to claim 1,
**characterized in**
**that** a cell pole (26) of the battery cell (14) is connected to the cell housing (18).

3. Battery module (4) according to claim 1 or 2,
**characterized in**
**that** the cell carrier (16) is at least partially made of an electrically conductive material.

4. Battery module (4) according to one of claims 1 to 3,
**characterized in**
**that** the battery cell (14) is electrically conductively contacted in the screwed-in state.

5. Battery module (4) according to one of claims 1 to 4,
**characterized in**
**that** a coolant channel (40) is integrated into the cell carrier (16), which coolant channel (40) is guided around the at least one threaded whole (36).

6. Battery module (4) according to one of claims 1 to 5,
**characterized in**
**that** a phase change material is introduced into the cell carrier (16) in the region of the threaded hole (36), which material retains a solid structure during a phase transition.

7. Battery module (4) according to one of claims 1 to 6,
**characterized in**
**that** a number of threaded holes (36) are arranged in a centered-rectangular or hexagonal grid pattern in the cell carrier (16).

8. Battery cell (14) for a battery module (4) according to one of claims 1 to 7, having a cylindrical cell housing (18), which has an external lateral surface (28), into which an external thread (32) is introduced, the external thread (32) extending essentially over the entire axial cell height (30) of the cell housing (18).

9. Electrically driven or drivable motor vehicle, comprising a motor vehicle battery (2) with a battery module (4) according to one of claims 1 to 7.

## Revendications

1. Module de batterie (4), comprenant au moins un élément de batterie (14) et un support de cellule (16),
- dans lequel l'élément de batterie (14) comprend un boîtier de cellule (18) cylindrique avec une surface d'enveloppe (28) côté extérieur,
- dans lequel un filetage extérieur (32) est réalisé dans la surface d'enveloppe (28),
- dans lequel le filetage extérieur (32) s'étend sensiblement sur toute la hauteur axiale (30) de la cellule du boîtier de cellule (18),
- dans lequel le support de cellule (16) comprend au moins un trou fileté (36) avec un filetage intérieur (38), et
- dans lequel le trou fileté (36) a une profondeur axiale suffisante pour que l'élément de batterie (14) soit entièrement vissé ou puisse être entièrement vissé.

2. Module de batterie (4) selon la revendication 1,
**caractérisé en ce**
**qu'**un pôle de cellule (26) de la cellule (14) de batterie est monté sur le boîtier (18) de cellule.

3. Module de batterie (4) selon la revendication 1 ou 2,
**caractérisé en ce**
**que** le support de cellule (16) est fabriqué au moins partiellement d'un matériau électriquement conducteur.

4. Module de batterie (4) selon l'une des revendications 1 à 3,
**caractérisé en ce**
**que** l'élément de batterie (14) est en contact électriquement conducteur à l'état vissé.

5. Module de batterie (4) selon l'une des revendications 1 à 4,
**caractérisé en ce**
**qu'**un canal de réfrigérant (40) est intégré dans le support de cellule (16), lequel est guidé autour du au moins un trou fileté (36).

6. Module de batterie (4) selon l'une des revendications 1 à 5,
**caractérisé en ce**
**que**, dans la zone du trou fileté (36), un matériau à changement de phase est introduit dans le support de cellule (16), lequel conserve une structure solide lors d'une transition de phase.

7. Module de batterie (4) selon l'une des revendications 1 à 6,
**caractérisé en ce**
**qu'**un certain nombre de trous filetés (36) sont disposés dans le support de cellule (16) selon une dimension de trame rectangulaire centrée ou hexagonale.

8. Elément de batterie (14) pour un module de batterie (4) selon l'une des revendications 1 à 7, comprenant un boîtier de cellule (18) cylindrique, qui comprend une surface d'enveloppe (28) côté extérieur, dans laquelle est réalisé un filetage extérieur (32), le filetage extérieur (32) s'étendant sensiblement sur toute la hauteur axiale (30) de l'élément du boîtier de cellule (18).

9. Véhicule automobile à propulsion ou à entraînement électrique, comprenant une batterie de véhicule (2) avec un module de batterie (4) selon l'une des revendications 1 à 7.
